Europäisches Patentamt

European Patent Office

Office européen des brevets

(11) Publication number: **0 327 830**
**A1**

## (12) EUROPEAN PATENT APPLICATION

(21) Application number: 89100592.8

(22) Date of filing: 13.01.89

(51) Int. Cl.⁴: **A47J 43/24**

(30) Priority: 19.01.88 IT 330888

(43) Date of publication of application:
16.08.89 Bulletin 89/33

(84) Designated Contracting States:
BE CH DE FR GB LI LU NL

(71) Applicant: **MEGA S.N.C. DI PIOVANI
NATALINO & C.**
**Via I Maggio 1**
**I-40127 Quarto Inferiore Bologna(IT)**

(72) Inventor: **Piovani, Natalino**
**Via Saliceto 8**
**I-40128 Bologna(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Device for rinsing vegetables, in particular salads.**

(57) The device comprises a container (1) closeable with a lid (5) internally rotatably supporting a vegetable containment basket actuatable through a gear by means of a crank rotatably mounted on said lid. The container has an inlet (7, 8) and an outlet (10) for the rinsing water and has two positions for resting on a surface and is placed in each position depending on whether the vegetables are to be rinsed or drained.

Fig.1

EP 0 327 830 A1

## DEVICE FOR RINSING VEGETABLES, IN PARTICULAR SALADS

The present invention relates to a device for rinsing and draining vegetables, in particular salads.

Devices for rinsing and draining vegetables, consisting of a basket which is caused to rotate inside a container (Belgian patent No. 825.939 and French patent No. 2.350.081), are already known.

In these containers the rinsing water is forced to flow through the basket and flows out of it continuously or fills the container up to a certain level and is discharged at the end of the rinsing operations. In both cases there are disadvantages. In the first case rinsing is not efficient and too much water is used. In the second case there is the inconvenience of having to handle a plug which can easily be lost.

The aim of the present invention is to provide a device which substantially eliminates the above described disadvantages.

Within the scope of this aim, an object of the present invention is to provide a device which is structurally simple and therefore economically advantageous.

This aim and this object are achieved by a device for rinsing vegetables, in particular salads, comprising a container closeable with a lid, internally rotatably supporting a vegetable containment basket actuatable through a gear by means of a crank rotatably mounted on said lid, said container having an inlet and an outlet for the rinsing water, characterized in that said container has two positions for resting on a surface, corresponding to the vegetable rinsing and drying positions respectively, the inlet being raised from the resting surface in said rinsing position so that the rinsing water can reach a level (L) at which said basket is partially immersed therein, the outlet being at the level of the resting surface in said drying position to allow the outflow of the water.

Further characteristics and advantages of the present invention will become apparent from the following description and from the accompanying drawings, wherein:

figure 1 is an isometric view of a device according to a preferred embodiment;

figure 2 is a side view of the device in a rinsing position;

figure 3 is a side view of the device turned to one side in a draining position of the rinsing water;

figures 4 and 5 are respectively front and rear views of the device in the rinsing position;

figure 6 is an isometric view of the device according to a further embodiment; and

figure 7 is a side view of the device of figure 6 in its rinsing position.

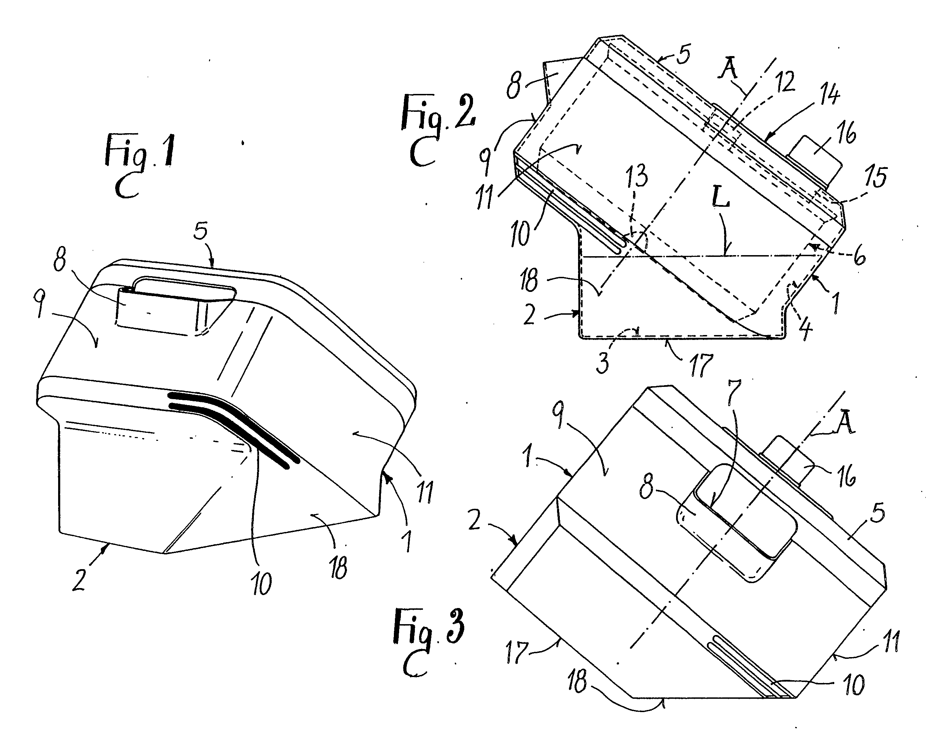

With reference to figures 1 to 5, the device comprises a quadrangular prismatic container 1 provided with a base 2.

Conveniently, the base 2 defines a chamber 3 communicating with the chamber enclosed by the container 1.

The container 1 is closeable by means of a lid 5 and internally rotatably accommodates a basket 6 in which the vegetables to be rinsed are inserted.

The rinsing water is fed into the container 1 through an opening 7 delimited by a lip 8 which is obtained by outwardly folding a central portion of the edge of a face 9 of the container. The rinsing water flows out through an opening 10 provided at the base of the container at an edge between the face 9 and the adjacent face 11.

The basket 6 is substantially cylindrical and, similarly to what occurs in conventional vegetable rinsing devices, it is constituted by two associable parts, one of which has a pinion 12 at its center and acts as closure, the other one acting as container and having on its bottom a seat 13 for a pivot protruding from below, formed for example by a ridge which protrudes into the chamber 3.

The basket 6 is caused to rotate by means of a crank 14 composed of a toothed wheel 15 having an actuation knob 16 and rotatably supported on the cover 5.

The toothed wheel 15 has an inner set of teeth which meshes with the pinion 12 with a transmission ratio such that the basket rotates approximately 5-6 times for one turn of the crank.

The base 2 is configured so as to offer two different orientations for the container l. However in both orientations the axis of rotation A of the basket, which passes through the pinion 12 and the seat 13, is inclined with respect to the horizontal plane preferably by 45°

In order to obtain this double orientation, the base 2 has two faces 17 and 18 which comprise an angle of 135° between them.

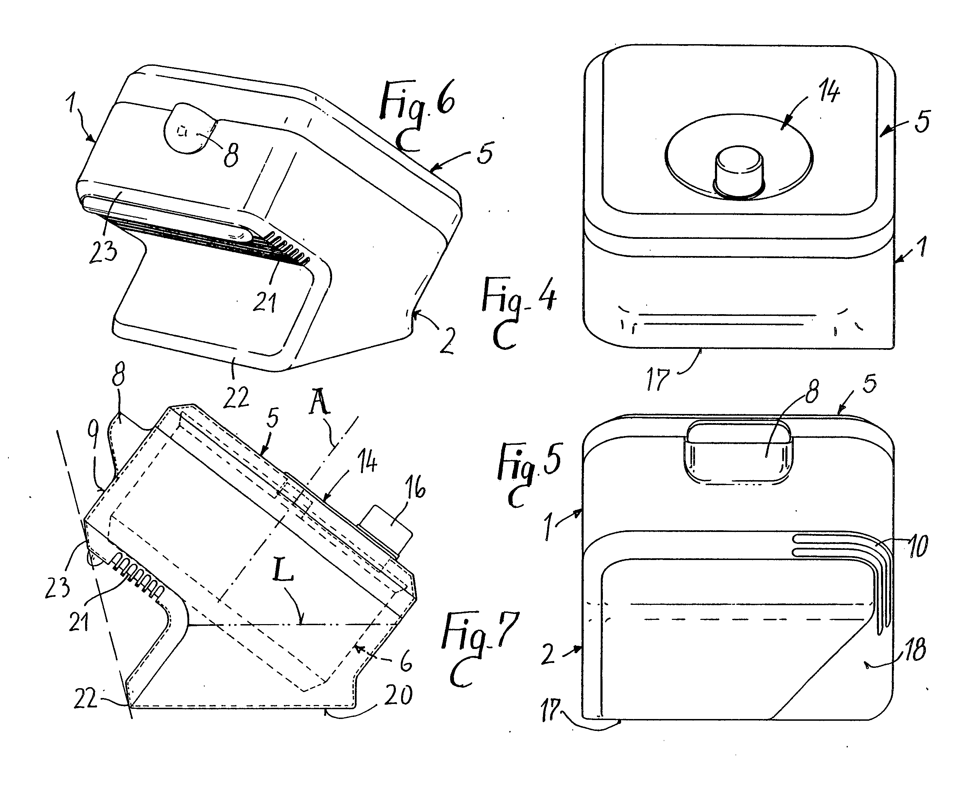

When the device rests on a surface with its face 17 (rinsing position) the rinsing water inlet 7 is arranged at the top of the container (figures 1, 2 and 5), while the water outlet 10 is arranged at a level overlying the base 2. On the other hand, when the device rests on a surface with its face 18 (rinsing water outflow position), the outlet 10 is adjacent to said surface (figure 3)

The use of the device is as follows. After putting the vegetables in the basket 6, and after arranging the latter inside the container 1, closing the container with the lid 5, the device is placed in the rinsing position (figures 1, 2 and 5) and water is introduced through the inlet 7 up to the overflow level L of the outlet 10.

The crank 16 is then actuated, causing the rotation of the basket 6 which stirs the water by dipping in it and rinses the vegetables.

Once this operation has ended, the device is tilted onto its face 18 so that all the water can flow out. At the same time the basket is caused to rapidly rotate by continuing to actuate the crank, centrifugally forcing the outflow of the water trapped among the vegetables. As can be seen, the invention fully achieves the intended aim. In particular it should be noted that the vegetables can be rinsed even in running water, since in the rinsing position the inflowing water can be drained continuously, keeping the level L of the water invariant inside the container 1

Numerous modifications and variations are possible in the practical embodiment of the invention, all of which are within the scope of the inventive concept. In one of these, illustrated in figures 6 and 7, the base 19 has a single face 20 which defines the rinsing position of the device, at which the water inlet 7 is at the top and the level inside the container is set by the outlets 21 extending at the bottom of the container 1 in the uppermost portion with respect to the resting surface.

When the device is to be placed in its draining position, it is tilted so that it rests on the surface with the edge 22 of the face 20 and with the lower corner 23 of the face 9. Naturally the inside of base 19 is shaped so as to avoid the retention of water.

It should be noted that by appropriately shaping the lip 8 of the container 1 it is possible to make water flow out of the inlet when the container is placed upside down.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for rinsing vegetables, in particular salads, comprising a container (1) closeable with a lid (5), internally rotatably supporting a vegetable containment basket (6) actuatable through a gear by means of a crank (l4) rotatably mounted on said lid, said container having an inlet (7, 8) and an outlet (10) for the rinsing water, characterized in that said container has two positions for resting on a surface, corresponding to the vegetable rinsing and drying positions respectively, the inlet (7, 8) being raised from the resting surface in said rinsing position so that the rinsing water can reach a level (L) at which said basket (6) is partially immersed therein, the outlet (10) being at the level of the resting surface in said drying position to allow the outflow of the water.

2. Device according to claim 1, characterized in that the container (1) has a sort of base (2) configured so as to provide two different orientations of the container at which the axis of rotation of the basket (6) is inclined with respect to the horizontal plane, said orientations corresponding to the rinsing and draining positions of the device.

3. Device according to claim 2, characterized in that said base (2) has two faces (17, 18) for resting on the surface, comprising an angle between so that when the device rests on one face (17) the rinsing water inlet (7) is arranged at the top of the container (1) and the outlet (10) is at a level overlying the base (2), while when the device rests on its other face (18) the outlet (10) is adjacent to the resting surface.

4. Device according to one of the preceding claims, characterized in that the axis of rotation of the basket (6) is inclined by approximately 45° with respect to the resting surface.

5. Device according to one of the preceding claims, characterized in that the rinsing water inlet (7) is defined by a lip (8) provided by outwardly folding a portion of the edge of the container (1).

Fig. 1
C

Fig. 2
C

Fig. 3
C

EP 0 327 830 A1

Fig. 6

1

8

23

21

22

Fig. 4

5

2

14

5

1

17

Fig. 7

8

9

5

A

14

16

23

L

21

22

6

20

Fig. 5

1

8

5

2

10

17

18

EP 0 327 830 A1

European Patent
Office

EUROPEAN SEARCH REPORT

Application Number

EP    89 10 0592

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | FR-A-2362609 (ETS. FOUINETEAU)<br>* page 2, line 28 - page 5, line 42; figures 1-4 * | 1, 2, 4, 5 | A47J43/24 |
| A | GB-A-1064223 (ZOROWICH)<br>* the whole document * | 3 | |
| A | FR-A-2368255 (MELITTA WERKE)<br>* page 2, line 16 - page 5, line 17; figures 1-4 * | 1-4 | |

TECHNICAL FIELDS
SEARCHED (Int. Cl.4 )

A47J

The present search report has been drawn up for all claims

| Place of search | Date of completion of the search | Examiner |
|---|---|---|
| THE HAGUE | 07 APRIL 1989 | MEINDERS H. |